# DEMANDE DE BREVET EUROPEEN

(11) **EP 4 414 879 A1**
(43) Date de publication de la demande: **14.08.2024**
(21) Numéro de dépôt: 24156387.3
(22) Date de dépôt: 07.02.2024
(51) Int. Cl.: G06F 21/72, G06F 21/74, H04W 12/30, H04W 12/45, G06F 21/81

(54) **CIRCUIT INTÉGRÉ COMPRENANT DES CIRCUITS SÉCURISÉS RESPECTANT DES SCHÉMAS DE SÉCURITÉ DIFFÉRENTS**

(30) Priorité: 08.02.2023 EP 23305166; 28.04.2023 FR 2304326
(71) Demandeur: STMicroelectronics International N.V., 1228 Plan-les-Ouates, Geneva (CH)
(72) Inventeur: TRAMONI, Alexandre, 83330 LE BEAUSSET (FR); ROMAIN, Fabrice, 83560 RIANS (FR)
(74) Mandataire: Cabinet Beaumont

(57) **Abrégé**

La présente description concerne un circuit intégré (2) comprenant au moins deux circuits sécurisés (3) ayant des fonctions similaires mais respectant des schémas de sécurité différents.

## Description

### Domaine technique

La présente description concerne de façon générale les circuits intégrés et, plus particulièrement, les circuits sécurisés de type carte universelle à circuit intégré (en anglais, Universal Integrated Circuit Card ou UICC). La présente description concerne notamment les circuits intégrant un module d'identification d'abonné (en anglais, Subscriber Identity Module ou SIM).

### Technique antérieure

Les cartes UICC et les cartes SIM sont historiquement constituées de microcartes électroniques portant une puce de circuit intégré et des contacts de raccordement à des éléments d'un dispositif électronique, par exemple un téléphone, dans lequel la carte est engagée. Ces cartes garantissent l'intégrité et la sécurité de données qu'elles contiennent, généralement des données personnelles de l'utilisateur. On fait parfois référence à des cartes physiques, pSIM ou pUICC (p pour physical).

Des cartes universelles à circuit intégré embarquées (eUICC ou embedded Universal Integrated Circuit Card) ont tendance à remplacer les cartes universelles à circuit intégré. Une carte universelle à circuit intégré embarquée consiste en un circuit intégré rapporté directement sur une carte électronique d'un dispositif ou intégré dans un système sur puce (SoC - System on Chip). Un circuit eUICC intègre généralement un module d'identification d'abonné.

Les applications des modules d'identification d'abonnés et plus généralement des UICC sont souvent liées à des réseaux de télécommunication et plus particulièrement à des opérateurs de téléphonie mobile. Ces opérateurs imposent généralement des caractéristiques qui leur sont propres pour certifier, c'est-à-dire autoriser sur leurs réseaux, un circuit intégrant une carte universelle à circuit intégré.

Cette dépendance conduit à dédier des fabrications à des marchés donnés, par exemple à des pays ou à des ensembles de pays.

### Résumé de l'invention

Il existe un besoin d'amélioration des cartes universelles à circuit intégré embarquées (eUICC).

Un mode de réalisation pallie tout ou partie des inconvénients des circuits eUICC connus.

Un mode de réalisation prévoit une solution pour rendre compatible une même plateforme ou système sur puce avec des réseau de télécommunication différents.

Plus particulièrement, un mode de réalisation prévoit un circuit intégré comprenant au moins deux circuits sécurisés ayant des fonctions similaires mais respectant des schémas de sécurité différents.

Selon un mode de réalisation, chaque circuit sécurisé est configuré pour une autorité de certification donnée.

Selon un mode de réalisation, chaque circuit sécurisé est configuré en fonction d'une zone géographique.

Selon un mode de réalisation, le circuit intégré comporte un ou plusieurs bus de communication accessibles aux circuits sécurisés par l'intermédiaire d'un sélecteur dont une borne de commande est reliée à une borne du circuit intégré.

Selon un mode de réalisation, le circuit intégré comporte des éléments partagés entre les deux circuits sécurisés.

Selon un mode de réalisation, le circuit intégré comporte des circuits de communication et d'entrée/sortie accessibles aux deux circuits sécurisés.

Selon un mode de réalisation, le circuit intégré comporte une ou plusieurs entités de gestion d'énergie accessibles aux deux circuits sécurisés.

Selon un mode de réalisation, le circuit intégré comporte un ou plusieurs circuits de génération d'horloge accessibles aux deux circuits sécurisés.

Selon un mode de réalisation, le circuit intégré comporte une sélection entre l'un ou l'autre des circuits sécurisés est effectuée par une commande logicielle provenant de l'extérieur du circuit intégré.

Un mode de réalisation prévoit une carte universelle à circuit intégré embarquée comportant un tel circuit intégré.

Selon un mode de réalisation, les schémas de sécurité correspondent à ceux d'opérateurs de téléphonie.

Selon un mode de réalisation, une fonction similaire est une fonction de chiffrement mise en oeuvre par les circuits sécurisés.

Selon un mode de réalisation, une fonction similaire est une fonction d'authentification d'un utilisateur.

Selon un mode de réalisation, l'autorité de certification est propre à une région géographique.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de carte électronique équipée d'un élément de sécurité embarqué ;
la figure 2 représente, de façon très schématique et sous forme de blocs, un mode de réalisation d'un circuit intégré ; et
la figure 3 représente, de façon très schématique et sous forme de blocs, un mode de réalisation d'un circuit de sécurité intégré dans le circuit de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les échanges entre une eUICC et les autres constituants du dispositif intégrant cette eUICC ou l'extérieur du dispositif n'ont pas été détaillés, les modes de réalisation décrits étant compatibles avec les solutions usuelles.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

On prendra par la suite l'exemple d'une carte universelle à circuit intégré embarquée (eUICC) mais on notera que la solution décrite s'applique plus généralement à tout circuit sécurisé intégrant des éléments de sécurité ou d'identification tel qu'un élément sécurisé embarqué (eSE - embedded Secure Element) dans des applications où des problèmes similaires se posent.

Classiquement, un circuit sécurisé, typiquement un circuit eUICC est dédié à une autorité de certification donnée, c'est-à-dire dans le cas d'une eSIM à un opérateur téléphonique ou un groupe d'opérateurs d'une zone géographique (un pays ou groupe de pays). Cette autorité de certification impose des caractéristiques fonctionnelles et de sécurité qui lui sont propres et qui ne sont pas nécessairement les mêmes que celles d'une autre autorité de certification.

Afin de permettre à un même dispositif de télécommunication, typiquement un téléphone mobile, d'être compatible avec plusieurs opérateurs ou plusieurs autorités de certification, il faut que ce téléphone comporte deux cartes universelles à circuit intégré (UICC), par exemple deux modules d'identification d'abonné physiques (des cartes SIM). En effet, les opérateurs refusent de partager leurs fonctionnalités sécurisées avec d'autres opérateurs. Or, les fabricants de téléphone souhaitent qu'un modèle de téléphone donné puisse être utilisé avec n'importe quel opérateur.

Avec des cartes SIM physiques, il suffit de changer la carte SIM dans le téléphone pour passer d'une compatibilité à une autre. Le développement des éléments de sécurité embarqués rend toutefois cette solution inapplicable.

On pourrait penser prévoir, côté fabricant de téléphone, deux (ou plusieurs) plateformes différentes, c'est-à-dire deux environnements électroniques complets, respectivement dédiés à des opérateurs différents. Lors de la fabrication, en fonction de l'opérateur auquel est destiné le système, le fabricant sélectionne la plateforme à intégrer dans le téléphone. Cela complexifie la fabrication en imposant deux unités de vente consommateur (SKU - Stock Keeping Unit) par modèle de téléphone.

On pourrait penser équiper chaque téléphone de deux éléments de sécurité embarqués respectivement dédiés à l'une ou l'autre des autorités de certification (l'un ou l'autre des marchés) soudés sur la carte électronique du téléphone. Toutefois, cela accroit le coût en imposant deux éléments de sécurité complets.

On pourrait envisager une solution mixte, c'est-à-dire fabriquer les téléphones selon une plateforme correspondant à une autorité de certification et prévoir un emplacement (slot) pour une carte SIM physique (une pUICC) permettant de le rendre compatible avec une autre autorité de certification. Cela impose toutefois de conserver un emplacement pour carte SIM dans le téléphone alors que la tendance est aujourd'hui de les supprimer.

Selon les modes de réalisation décrits, on prévoit de réaliser un unique élément de sécurité embarqué, ou carte universelle à circuit intégré embarquée, sous forme de circuit intégré, qui soit configurable en fonction de l'autorité de certification à laquelle le téléphone, est destiné.

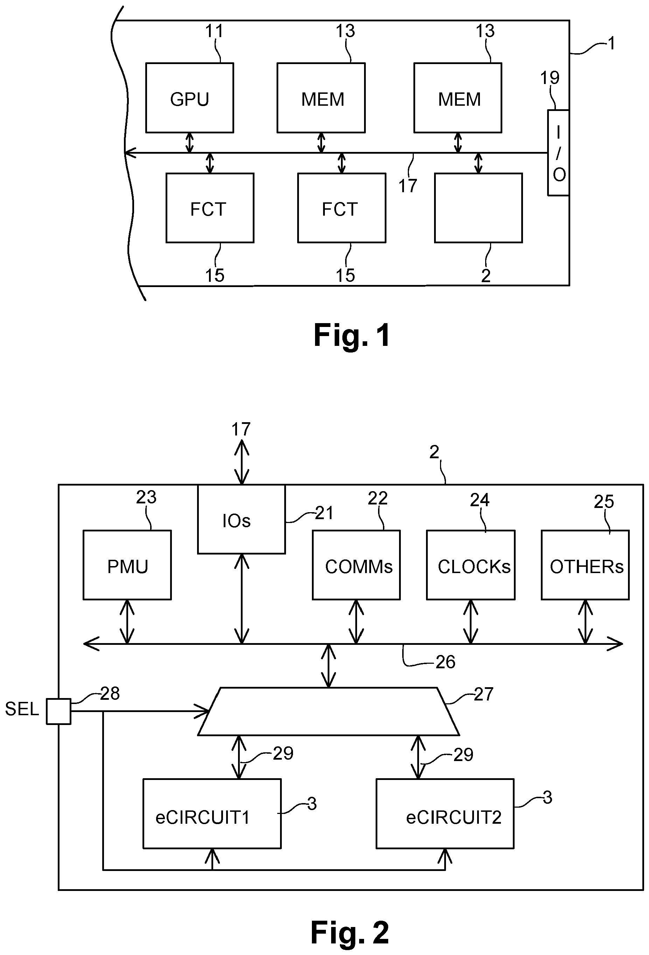

La figure 1 représente, de façon très schématique et sous forme de blocs, un exemple de système électronique (par exemple une carte électronique ou un système sur puce) du type auquel s'appliquent les modes de réalisation décrits.

Le système électronique 1 de la figure 1 comporte, dans cet exemple :
un microcontrôleur ou microprocesseur général 11 (GPU) ;
des mémoires 13 (MEM), volatiles et non volatiles ;
divers circuits 15 (FCT) répondant aux fonctions requises pour le fonctionnement du dispositif (du téléphone), par exemple un contrôleur NFC, un circuit graphique, un circuit audio, etc. ; et
un ou plusieurs bus 17 de communication (données, adresses et commandes) des circuit du système 1 entre eux ou avec l'extérieur par l'intermédiaire d'interfaces d'entrée/sortie 19 (I/O).

Le système comporte également un circuit intégré 2 qui constitue un élément de sécurité embarqué ou carte universelle à circuit intégré embarquée (eUICC). Ce circuit 2 communique avec tout ou partie des autres circuits du système 1 par l'intermédiaire du bus 17.

Un système 1 tel qu'illustré en figure 1 est en soi usuel et ne sera donc pas détaillé plus avant.

Selon les modes de réalisation décrits, on prévoit d'équiper le système 1 d'un élément de sécurité embarqué ou circuit intégré 2 ayant une constitution particulière.

La figure 2 représente, de façon très schématique et sous forme de blocs, un mode de réalisation d'un circuit intégré sécurisé 2.

Selon ce mode de réalisation, le circuit 2 intègre deux circuiteries sécurisées ayant des fonctions similaires mais respectant des schémas de sécurité différents.

Par schémas de sécurité différents, on entend que les circuits 3 qui sont intégrés dans le même élément de sécurité embarqué (eSE) ou la même carte universelle à circuit intégré embarquée (eUICC) 2 sont conçus pour respecter les caractéristiques requises par des autorités de certification différentes.

Un circuit intégré 2 selon les modes de réalisation décrits comporte donc des éléments ou circuits 3 (eCIRCUIT1, eCIRCUIT2) dédiés à des environnements sécurisés différents (des autorités de certification différentes) et des éléments ou circuits partagés entre ces circuits 3.

Plus précisément, l'élément de sécurité embarqué 2 intègre, entre autres et de façon usuelle :
une ou plusieurs interfaces 21 d'entrée/sortie (IOs) pour communiquer avec les autres circuits du système 1 (figure 1) via les bus 17 ;
un ou plusieurs circuits 22 de communication (COMMs) ;
une entité 23 de gestion de l'alimentation (PMU - Power Management Unit) ;
un ou plusieurs circuits 24 de synchronisation ou d'horloge (CLOCKs) ;
un ou plusieurs autres circuits 25 (OTHERs) selon les fonctionnalités attendues pour le circuit intégré 2 et correspondant à des fonctions partageables indépendamment de l'opérateur ou de l'autorité de certification ; et
un ou plusieurs bus 26 de communication des éléments entre eux et avec les interfaces d'entrée/sortie.

Selon le mode de réalisation de la figure 2, on prévoit d'intégrer, dans l'élément de sécurité 2, deux circuits 3 (eCIRCUIT1, eCIRCUIT2) contenant les fonctions non partageables de l'élément de sécurité embarqué. En d'autres termes, il s'agit des fonctions dédiées à chaque opérateur ou chaque autorité de certification.

En prenant l'exemple de la téléphonie, une fonction similaire à deux opérateurs mais non partageable est, par exemple, un algorithme de chiffrement contenu dans le circuit sécurisé. Un tel algorithme est typiquement utilisé par les opérateurs, mais chaque opérateur a son propre algorithme, donc son schéma de sécurité. S'agissant d'une fonction similaire ayant trait à la sécurité des échanges (le chiffrement), chaque circuit sécurisé contient l'algorithme de l'opérateur auquel ce circuit sécurisé est dédié. Les fonctions (de chiffrement) sont similaires car de même nature aux deux circuits de sécurité, mais remplissent des schémas de sécurité différents (l'algorithme est propre à chaque opérateur).

Selon un autre exemple, la fonction similaire remplie par le circuit sécurisé (fonction similaire pour les deux circuits sécurisés) est une fonction d'authentification (typiquement de l'abonné au réseau de télécommunication ou de téléphonie) et le schéma de sécurité (propre à chaque circuit sécurisé) est l'algorithme d'authentification.

Chaque circuit 3 est relié, par un ou plusieurs bus 29 qui lui sont propres, aux bus 27 via un sélecteur 27 attribuant la liaison avec les bus 26, donc avec les autres constituants du circuit 2, à l'un ou l'autre des circuits 3. Le sélecteur 27 est commandé par un signal de sélection SEL, provenant de l'extérieur du circuit 2, par une borne ou un port dédié 28.

Selon un mode de réalisation le signal SEL est fourni par le microcontrôleur 11 du système 1 en fonction de la région géographique dans laquelle se trouve le téléphone.

Selon un autre mode de réalisation, l'état du signal de sélection est stocké dans une mémoire non volatile, lue par le microcontrôleur 11 à chaque démarrage du téléphone.

La borne 28 est de préférence également reliée directement aux deux circuits 3. Cela permet, qu'au démarrage, les deux circuits soient activés puis, qu'en fonction de l'état du signal Sel, l'un se mette en veille et/ou se désactive et l'autre reste actif.

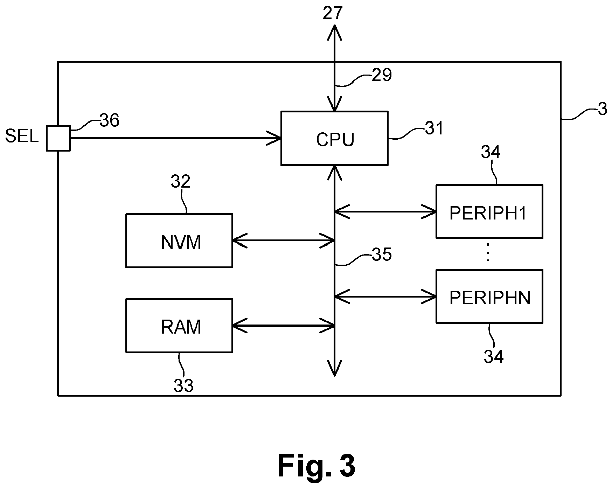

La figure 3 représente, de façon très schématique et sous forme de blocs, un mode de réalisation d'un circuit 3 de sécurité, intégré dans le circuit de la figure 2.

Un circuit 3 comporte, selon cet exemple :
une unité de traitement 31 ou microprocesseur (CPU) ;
une ou plusieurs mémoires non volatiles 32 (NVM) ;
une ou plusieurs mémoires volatiles 33 (RAM) ;
un ou plusieurs circuits 34 (PERIPH1, ..., PERIPHN) ou périphériques de l'unité 31, dédiés aux caractéristiques requises par l'autorité de certification ; et
un ou plusieurs bus 35 de communication entre les différents constituants du circuit 3.

L'unité 31 est reliée par le bus 29 au sélecteur 27 (figure 2) et reçoit, via un port dédié 36, le signal SEL.

Chaque circuiterie 3 comprend les éléments et fonctions requises pour traiter des contraintes de sécurité qui lui sont propres, indépendamment (sans avoir besoin) de l'autre circuiterie 3 du circuit 2 pour mettre en oeuvre les fonctionnalités requises.

De préférence, le circuit 2 comporte deux et seulement deux circuiteries dédiées 3. Cela permet une sélection simple via le sélecteur par un signal SEL à deux états.

On notera que les constituants des circuits 2 et 3, hormis le sélecteur 27 sont en eux-mêmes usuels que ce soit en termes de structure ou de fonctionnalités. En effet, les modes de réalisation décrits répartissent, au sein de l'élément sécurisé embarqué 2, les constituants partageables entre plusieurs autorités de certification et les constituants qui doivent être dédiées à telle ou telle autorité de certification, mais restent compatibles avec un fonctionnement usuel.

Pour le fabricant de téléphone, les solutions décrites permettent de conserver la même plateforme matérielle et logicielle pour une architecture donnée (un modèle donné) de téléphone, indépendamment du marché (de l'opérateur) auquel ce téléphone est destiné.

Pour l'opérateur, cela respecte les contraintes de sécurité de l'autorité de certification à laquelle il appartient dans la mesure où, une fois le circuit 3 qui lui est dédié, sélectionné, tout se passe comme si le circuit 2 constituait un élément de sécurité embarqué dédié à cette autorité.

Un exemple particulier d'application de la solution décrite concerne la réalisation d'une eUICC partagée entre des certifications connues sous les dénominations OSCCA et CC. Typiquement, une certification en téléphonie selon les caractéristiques CC (common Criteria) ne peut être obtenue si la circuiterie sécurisée ou les programmes qui y sont exécutés sont partagés avec une autre autorité de certification. Par ailleurs, une certification OSCCA requiert le chargement d'un algorithme de chiffrement spécifique différent de celui utilisé par une certification CC.

L'exemple ci-dessus peut également correspondre à des zones géographiques. En effet, la certification OSCCA correspond plus particulièrement au marché chinois tandis que d'autres pays ou régions du monde partagent une autre certification.

Le fait d'isoler dans des circuits 3 ou circuiteries dédiées les éléments correspondant aux caractéristiques de certification dédiées permet qu'un même circuit sécurisé 2 puisse obtenir les certifications de plusieurs environnements, par exemple OSCCA et CC comme mentionné ci-dessus. Toutefois, tous les constituants de l'élément sécurisé embarqué qui sont partageables sont communs aux deux environnements, ce qui constitue un gain en termes d'encombrement et de coût.

On notera que le sélecteur 27 est un sélecteur matériel et non un sélecteur logiciel afin de garantir une absence de fonctionnement du circuit 2 avec les deux circuits sécurisés 3 simultanément. Le sélecteur matériel peut, le cas échéant, être commandé par logiciel via le port 28 mais ce logiciel est alors hébergé par un circuit externe au circuit 2 afin de préserver les zones certifiées par les autorités de certification des circuits sécurisés 3.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Circuit intégré (2) comprenant au moins deux circuits sécurisés (3) ayant des fonctions similaires mais respectant des schémas de sécurité différents.

2. Circuit intégré (2) selon la revendication 1, dans lequel chaque circuit sécurisé (3) est configuré pour une autorité de certification donnée.

3. Circuit intégré (2) selon la revendication 1 ou 2, dans lequel chaque circuit sécurisé (3) est configuré en fonction d'une zone géographique.

4. Circuit intégré (2) selon l'une quelconque des revendications 1 à 3, comportant un ou plusieurs bus de communication (26) accessibles aux circuits sécurisés (3) par l'intermédiaire d'un sélecteur (27) dont une borne de commande est reliée à une borne (28) du circuit intégré.

5. Circuit intégré (2) selon l'une quelconque des revendications 1 à 4, comprenant des éléments (21, 22, 23, 24, 25, 26) partagés entre les deux circuits sécurisés.

6. Circuit intégré (2) selon l'une quelconque des revendications 1 à 5, comportant des circuits de communication (22) et d'entrée/sortie (21) accessibles aux deux circuits sécurisés (3).

7. Circuit intégré (2) selon l'une quelconque des revendications 1 à 6, comportant une ou plusieurs entités de gestion d'énergie (23) accessibles aux deux circuits sécurisés (3).

8. Circuit intégré (2) selon l'une quelconque des revendications 1 à 7, comportant un ou plusieurs circuits de génération d'horloge (24) accessibles aux deux circuits sécurisés (3).

9. Circuit intégré (2) selon l'une quelconque des revendications 1 à 8, dans lequel une sélection entre l'un ou l'autre des circuits sécurisés (3) est effectuée par une commande logicielle provenant de l'extérieur du circuit intégré.

10. Carte universelle à circuit intégré embarquée, dans laquelle le circuit intégré est conforme à l'une quelconque des revendications 1 à 9.

11. Carte selon la revendication 10, dans laquelle les schémas de sécurité correspondent à ceux d'opérateurs de téléphonie.

12. Carte selon la revendication 10 ou 11, dans laquelle une fonction similaire est une fonction de chiffrement mise en oeuvre par les circuits sécurisés.

13. Carte selon l'une quelconque des revendications 10 à 12, dans laquelle une fonction similaire est une fonction d'authentification d'un utilisateur.

14. Carte selon l'une quelconque des revendications 10 à 13, dans leur rattachement à la revendication 2, dans laquelle l'autorité de certification est propre à une région géographique.
